Europäisches Patentamt

European Patent Office

Office européen des brevets

(11) Publication number: **0 236 101**
**A2**

(12) **EUROPEAN PATENT APPLICATION**

(21) Application number: **87301783.4**

(22) Date of filing: **02.03.87**

(51) Int. Cl.⁴: **A 01 K 97/04**
**C 09 B 67/42**

(30) Priority: **03.03.86 GB 8605220**

(43) Date of publication of application:
**09.09.87 Bulletin 87/37**

(84) Designated Contracting States:
**BE DE ES FR GB IT LU NL SE**

(71) Applicant: **Gould, Peter Philip**
**Nutters Den 16 Edmund Road**
**Hastings East Sussex TN35 5JN (GB)**

(72) Inventor: **Gould, Peter Philip**
**'Nutters Den' 16 Edmund Road**
**Hastings, East Sussex, TN35 5JN. (GB)**

**Spencer, Allan Harvey**
**Gwynfa, Pant Hill, Rhosllanerchrugog**
**Nr. Wrexham Clwyd Wales (GB)**

(74) Representative: **Turner, Paul Malcolm Paul M. Turner &**
**Company et al**
**91 Wimpole Street**
**London W1M 8AH (GB)**

(54) Dye compositions for live bait.

(57) A composition for dyeing organic material, particularly live bait for fishing, the composition being a dyestuff of non-carcinogenic material, a dye binder, optionally a further binder and a solvent such as isopropanol.

EP 0 236 101 A2

Bundesdruckerei Berlin

**Description**

DYE COMPOSITIONS FOR LIVE BAIT

The present invention relates to dye compositions for bait, particularly live bait such as maggots, as well as ground bait.

Fishing is a popular sport in Great Britain. When fishing, most fishermen use live bait, particularly maggots. The maggots are used in a number of different forms, but up to 40% of maggots used in Great Britain are dyed. The dyeing of the maggot is said to be more attractive to the fish and enables the fisherman to improve his catch. Many maggots are dyed yellow, bronze, red, green or blue with an aniline dyestuff. A particularly popular dyestuff is crisodyne. Aniline dyes and in particular crisodyne are known to be carcinogenic.

Live bait can be purchased pre-dyed. Alternatively, many anglers dye their own maggots by applying a dye power such as crisodyne to a container full of maggots. The dye is dispersed through the maggots and enters the grease layer on the body of the maggot. In handling the maggots during the dyeing process and at the time of applying the bait to the hook, dyestuff is coated onto the hands of the angler. It seeps through the skin and through any breaks in the skin and can cause many different types of cancer, including bladder cancer.

The present invention attempts to overcome the problems of applying dyestuffs to maggots and in particular relates to a composition which is considered to be non-carcinogenic and yet can still be attached to the surface of the live bait.

According to the present invention, there is provided a composition for dyeing living material, which composition comprises all non carcinogenic components including a dyestuff; a dye binder, binder, and a $C_{1-4}$ alkanol solvent; or a dye binder, and a $C_{1-4}$ alkanol solvent.

Particular dyestuffs which can be used in the present invention are the azo dyestuffs and/or the cyannine dyestuffs. The dyestuffs may be in liquid form or be supplied as powders. Useful dyestuffs are the monoazo dyestuffs, the azo cobalt complex dyestuffs, the diazo dyestuffs, the monoazo iron complex dyestuffs, as well as a mixture of these. Red or yellow dyes may include carmosine EI22, cochineal EI20, erythrosene EI27, amaranth EI23, ponceau EI24, sunset yellow EI04, quinolene yellow EIIO, root tartrazine EI02. Blue dyes include patent blue EI3I and indigo carmine EI32. Other materials which can be used as dyestuffs are iron oxides EI72 and titanium dioxide EI7I. Particularly suitable dyestuffs are the Morfast dyes in the Morfast I00 series such as yellow EI0I. Other dyestuffs which are useful are the oxyazo dyestuffs and vegetable dyestuffs. However, it is an essential feature of the invention that all the components should be non carcinogenic.

Generally the dyestuffs are mordant in that they require an additional substance to fix the dyestuff onto the material that is to be dyed, i.e. in the case of the present invention, the bait to be used for fishing. The particular binders are preferred are the pyrolidones and, in particular, polyvinylpyrolidone. Other dye binders which can be used are methyl cellulose, methocel, ethyl cellulose, hydroxy ethyl cellulose, hydroxy propyl cellulose, hypro mellose, polyvinyl methyl acetate, polyvinyl acetate and other polyvinyl polymers, polyvinylmethacrylate (pvm/ma), sodium lauryl sulphate, macrogel ethers, sorbitan derivatives, polyethylene glycols, surfactants and detergents. Other binders may be used with certain combinations of dyestuffs as required.

While not wishing to be bound by theory, it is believed that the binders act as a carrier for the dye. When live bait such as maggots are dyed, it is found that the live bait has an outer coating of grease. The lower alkanol solvent and binder helps breaks down the grease layer and allows the binder carrying the dyestuff to reach the skin of the maggot. The solvent, also evaporates quickly from the maggot leaving them ready for use.

The present invention also provides a method of dyeing bait, in particular live bait such as maggots although other bait such as ground bait can be included, which method comprises mixing lower alkanol and dye binder, mixing non-carcinogenic dyestuff with the dye binder, adding the two mixes together and continuing mixing for a period to provide homogeneous dispersion of the components.

A particular method of mixing the material of the present invention is as follows. In a well-ventilated static-free area marked flammable, the dye in liquid form and dye binder are mixed for five minutes. In addition, the dye binder is also mixed with the lower alkanol e.g. isopropanol, again by gentle shaking for at least five minutes. Finally, the binder and isopropanol is added to the dye and dye binder and mixed for a further ten minutes by agitation. On mixing the materials are placed into bottles and filled.

When the dye is in a powder form, powder dye and powder dye binder are premixed. The solvent such as isopropanol is stirred such that a vortex is produced in the liquid. The premixed dye and dye binder are added to the vortex in a steady stream in order to avoid deposit of the powder on the liquid surface. When the addition is completed, stirring is preferably continued for about 30 to 45 minutes. Some setting may occur although gentle agitation will cause redispersion.

Particular ratios of binder to dyestuff can be between 5 and I50 parts per I00 parts by volume of dyestuff. When mixing the lower alkanol with the binder 0.5 parts to I0 parts of binder per I00 parts of alcohol by volume is generally used.

Particular examples of mixes which can be used in the present invention can be described. The ratios indicated are weight to weight.

Examples

| Example Number | 1 | 2 | 3 | 4 | 5 |
|---|---|---|---|---|---|
| Binder<br>Polyvinylpyrolidone | X | X | X | X | X |
| Yellow 101<br>Monoazo dye | X | | | | |
| Yellow 102<br>azo dye cobalt complex | X | | X | | |
| Red 101 diazo dye | | X | | | |
| Red 102 monoazo cobalt<br>dye | | X | X | | |
| Brown 101 monoazo dye | | | | X | |
| Red 104 iron azo dye<br>complex | | | | X | X |
| Solvent isopropanol | X | X | X | X | X |
| Other binder | | X | X | X | X |
| Colour | Yellow | Red | Bronze | Bronze | Blood red |

Particular formulations of the above examples areas follows:-

3

Example 1

    a) polyvinylpyrolidone binder : yellow 101 monoazo dye

    0.9 : 2.5 and 1.1 : 7.5

    b) polyvinylpyrolidone binder : yellow 102 azo dye cobalt complex

    0.9 : 2.5 and 1.1 : 7.5

    c) polyvinylpyrolidone binder : isopropanol

    0.8 : 79.2 and 1.2 : 96.8

The maggots were cleaned and freed of dust by sieving. The dye formulation was prepared by mixing the polyvinylpyrolidone binder with the dyestuff and mixing components (a) and (b) together in the ratio as indicated in a large container for five minutes. Components (c) i.e. the binder and the isopropanol were mixed separately for five minutes and components (a) and (b) were added. After further mixing for ten minutes, the dye formulation was placed into bottles.

For each 500 ml of maggots 5 ml of dye formulation were added. The maggots were tumbled to ensure even coating of the dyestuff onto the maggots. If the dyestuff is being used without a suitable mixer, i.e. at home, then 10 ml per 100 ml of maggots were used.

Example 2

    a) polyvinylpyrolidone binder : red 101 diazo dye

    0.9 : 2.5 and 1.1 : 7.5

    b) polyvinylpyrolidone binder : red 102 monoazo cobalt complex

    0.9 : 2.5 and 1.1 : 7.5

    c) polyvinylpyrolidone binder : isopropanol

    0.8 : 79.2 and 1.2 : 96.8

    d) polyvinylpyrolidone binder : other binder e.g. surfactant

    45:55 and 55:45

The method of example 1 was followed resulting in red dyed maggots.

Example 3

    a) polyvinylpyrolidone binder : yellow 102 azo dye cobalt complex

    0.9 : 3.6 and 1.1 : 8.8

    b) polyvinylpyrolidone binder : red 102 monoazo cobalt complex

    0.9 : 0.9 and 1.1 : 3.2

    c) polyvinylpyrolidone binder : isopropanol

    0.8 : 79.2 and 1.2 : 96.8

    d) polyvinylpyrolidone binder : other binder e.g. surfactant

    45:55 and 55:45

The method of Example 1 was followed resulting in orange dyed maggots.

Example 4

    a) polyvinylpyrolidone binder : brown 101 monoazo dye

    0.9 : 25 and 1.1 : 12.5

    b) polyvinylpyrolidone binder : red 104 azo dye cobalt complex

    0.9 : 2.5 and 1.1 : 7.5

    c) polyvinylpyrolidone binder : ISPBX's

    0.8 : 79.2 and 1.2 : 96.8

    d) polyvinylpyrolidone binder : other binder e.g. surfactant

    45:55 and 55:45

The method of Example 1 was followed resulting in bronze dyed maggots.

Example 5

    a) polyvinylpyrolidone binder : red 104 iron azo complex

    0.9 : 2.5 and 1.1 : 12.5

    b) polyvinylpyrolidone binder : isopropanol

    0.8 : 79.2 and 1.2 : 96.8

    c) polyvinylpyrolidone binder : other binder e.g. surfactant

    45:55 and 55:45

The method of example 1 was followed resulting in blood red dyed maggots.

Examples 6 to 8

Various mixes are prepared for concentrates, i.e. dye formulations which can be diluted with lower alkanol prior to dyeing of bait. The following shows the ratios by volume for the dye formulation.

Example 6

    a) polyvinylpyrolidone binder ; yellow 102 monoazo dye

    0.9 : 4.5 and 1.1 : 5.5

b) polyvinylpyrolidone binder : yellow I02 azo dye cobalt complex
0.9 : 4.5 and I.I : 5.5
c) polyvinylpyrolidone binder : isopropanol
0.8 : 79.2 and I.2 : 96.8
d) polyvinylpyrolidone binder : other binder e.g. surfactant
45:55 and 55:45

Example 7

a) polyvinylpyrolidone binder : red I0 diazo dye
0.9 : 4.5 and I.I : 5.5
b) polyvinylpyrolidone binder : red I02 monoazo cobalt complex
0.9 : 4.5 and I.I : 5.5
c) polyvinylpyrolidone binder : isopropanol
0.8 : 79.2 and I.2 : 96.8
d) polyvinylpyrolidone binder : other binder e.g. surfactant
45:55 and 55:45

Example 8

a) polyvinylpyrolidone binder : yellow I02 azo dye cobalt complex
0.9 : 7.2 and I.I : 8.8
b) polyvinylpyrolidone binder : red I02 monoazo cobalt complex
0.9 : isopropanol and I.I : 2.2
c) polyvinylpyrolidone binder : isopropanol
0.8 : 79.2 and I.2 : 96.8
d) polyvinylpyrolidone binder : other binder e.g. surfactant
45:55 and 55:45

The composition of the present invention may be used on live bait such as maggots, ground bait (generally a farinaceous material), boilies (a type of bait for carp fishing having a bread base with egg, milk and flavouring), blast frozen sea bait (small fish e.g. whiting or sprats) as well as fishing spinners in some cases metal spinners.

The advantages of the composition of the present invention is that a more uniform colour can be applied to the bait. In addition, the fish may be eaten once caught without danger of carcinogenic substances affecting the fish.

**Claims**

1. A composition for dyeing living material, which composition comprises all non carcinogenic components including a dyestuff; a dye binder, binder, and a $C_{1-4}$ alkanol solvent; or a dye binder, and a $C_{1-4}$ alkanol solvent.

2. A composition as claimed in claim I, wherein the dye is a monoazo dye, an azo cobalt complete dye, a diazo dye, a monoazo iron complex, oxyazo dye, vegetable dye or a mixture thereof.

3. A composition as claimed in claim I wherein the dye is carmosine EI22, cochineal EI20, erythrosene EI27, amaranth EI23, ponceau EI24, sunset yellow EI04, quinolene yellow EII0, root tartrazine EI02, patent blue EI3I, indigo carmine EI32.

4. A composition as claimed in claim I wherein the dye is iron oxides EI72 or titanium dioxide EI7I.

5. A composition as claimed in any one of the preceding claims wherein the binder is a pyrolidone, methyl cellulose, ethyl cellulose, hydroxy ethyl cellulose, hydroxy propyl cellulose, hypro mellose, polyvinyl methyl acetate, polyvinyl acetate polyvinylmethacrylate, sodium lauryl sulphate, macrogel ethers, sorbitan derivatives and polyethylene glycols.

6. A composition as claimed in any one of the preceding claims, wherein the solvent is isopropanol.

7. A method of dyeing organic material which method comprises mixing lower alkanol and dye binder, mixing non-carcinogenic dyestuff with the dye binder, adding the two mixes together and continuing mixing for a period to provide homogeneous dispersion of the components.

8. A method of dyeing organic material whichmethod comprises mixing powder dye and dye binder, stirring the mixed powder into a swirling mass of solvent and continuing mixing until a homogeneous dispersion of the components occurs.